# EUROPEAN PATENT SPECIFICATION

(11) **EP 3 371 919 B1**
(45) Date of publication and mention of the grant of the patent: **30.12.2020**
(21) Application number: 16715782.5
(22) Date of filing: 01.04.2016
(51) Int. Cl.: H04L 5/00

(54) **SHORT TRANSMISSION TIME INTERVAL (TTI)**
KURZES ÜBERTRAGUNGSZEITINTERVALL (TTI)
INTERVALLE DE TEMPS DE TRANSMISSION (TTI) COURT

(30) Priority: 03.11.2015 US 201562250448 P
(43) Date of publication of application: 12.09.2018
(73) Proprietor: Apple Inc., Cupertino, CA 95014 (US)
(72) Inventor: IBARS CASAS, Christian, Santa Clara, California 95054 (US); HAN, Seunghee, San Jose, California 95120 (US); HE, Hong, Beijing, Heilongjiang 100190 (CN); DAVYDOV, Alexei, Nizhny Novgorod 603132 (RU)
(74) Representative: Rooney, John-Paul
(86) International application number: PCT/US2016/025744
(87) International publication number: WO 2017/078786

(56) References cited:
- EP-A2- 2 536 050
- WO-A1-2013/041138
- ERICSSON: "Study of shorter TTI for latency reduction", 3GPP DRAFT; R2-154740 STUDY OF SHORTER TTI FOR LATENCY REDUCTION, 3RD GENERATION PARTNERSHIP PROJECT (3GPP), MOBILE COMPETENCE CENTRE , vol. RAN WG2 4 October 2015 (2015-10-04), XP051005229, SOPHIA-ANTIPOLIS CEDEX, FRANCE Retrieved from the Internet: URL:http://www.3gpp.org/ftp/Meetings_3GPP_ SYNC/RAN2/Docs/ [retrieved on 2015-10-04]

## Description

### BACKGROUND

Wireless mobile communication technology uses various standards and protocols to transmit data between anode (e.g., a transmission station such as an eNodeB) and a wireless device (e.g., a mobile device). Some wireless devices communicate using orthogonal frequency-division multiple access (OFDMA) in a downlink (DL) transmission and single carrier frequency division multiple access (SC-FDMA) in an uplink (UL) transmission. Standards and protocols that use orthogonal frequency-division multiplexing (OFDM) for signal transmission include the third generation partnership project (3GPP) long term evolution (LTE), the Institute of Electrical and Electronics Engineers (IEEE) 802.16 standard (e.g., 802.16e, 802.16m), which is commonly known to industry groups as WiMAX (Worldwide interoperability for Microwave Access), and the IEEE 802.11 standard, which is commonly known to industry groups as WiFi. In 3GPP radio access network (RAN) LTE systems, the node can be a combination of Evolved Universal Terrestrial Radio Access Network (E-UTRAN) Node Bs (also commonly denoted as evolved Node Bs, enhanced Node Bs, eNodeBs, or eNBs) and Radio Network Controllers (RNCs), which communicate with the wireless device, known as a user equipment (UE). The downlink (DL) transmission can be a communication from the node to the wireless device (e.g., UE), and the uplink (UL) transmission can be a communication from the wireless device to the node.

In addition, a wireless multiple-access communications system may include a number of eNodeBs, each simultaneously supporting communication for multiple mobile devices. The eNodeBs may communicate with mobile devices on a downlink and an uplink. In some wireless networks, a UE may be capable of supporting multiple wireless technologies concurrently. For example, a UE may simultaneously transmit data over a wireless local area network (WLAN) link and a third generation partnership project (3GPP) Long Term Evolution (LTE) link or other type of cellular link. However, current scalability, deployment, functionality, and protocols for communication between the UE and the eNodeB and/or the WLAN can be inefficient to meet the current demands. Thus, a desire exits for a solution to provide functionality and protocols scalable and efficient to meet the constraints for communication between the UE and the eNodeB and/or the WLAN while reducing data transmission latency.

WO 2013/041138 A1 discloses an apparatus and a method for communication. In the proposed solution according to this document, communication on a shared channel utilizes a first format based on sub frame length and/or a second format based on Orthogonal Frequency-Division Multiple Access symbol length. 3GPP Tdoc. R2-154740, "Study of shorter TTI for latency reduction ", 3GPP TSG-RAN WG2 #91bis, October 2015 discusses aspects on TTI shortening, such as processing impact, and assesses the possible overhead associated with a shorter TTI.

### SUMMARY

The object of the present application is solved by the independent claims. Advantageous embodiments are described by the dependent claims.

### BRIEF DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:
FIG. 1 illustrates a mobile communication network within a cell in accordance with an example;
FIG. 2 illustrates a diagram of radio frame resources (e.g., a resource grid) for a downlink (DL) transmission including a physical downlink control channel (PDCCH) in accordance with an example;
FIG. 3 illustrates a diagram of air interface latency of third generation partnership project (3GPP) long-term evolution (LTE) downlink (DL) transmission and uplink (UL) transmission in accordance with an example;
FIG. 4 illustrates a table of average air-interface latency performance improvement derived from reduced transmission time interval (TTI) for both uplink and downlink transmission in accordance with an example;
FIG. 5 illustrates a chart of user perceived throughput for various TTI durations in accordance with an example;
FIG. 6 illustrates a diagram of multiplexing short TTI and 3GPP LTE Rel. 12 defined TTI in a subframe for downlink (DL) and uplink (UL) transmission in accordance with an example;
FIG. 7 illustrates a diagram of operations for short TTI and 3GPP LTE Rel. 12 defined TTI in accordance with an example;
FIG. 8 illustrates a diagram of bundling one or more short TTI in accordance with an example;
FIG. 9 depicts functionality of a user equipment (UE) to perform reduced transmission time interval (TTI) data transmission within a wireless communication network in accordance with an example;
FIG. 10 depicts additional functionality of an eNodeB to perform reduced transmission time interval (TTI) data transmission with a user equipment (UE) within a wireless communication network in accordance with an example;
FIG. 11 depicts additional functionality of an eNodeB to perform reduced transmission time interval (TTI) data transmission with a user equipment (UE) within a wireless communication network in accordance with an example;
FIG. 12 illustrates a diagram of example components of a wireless device (e.g. User Equipment "UE") device in accordance with an example;
FIG. 13 illustrates a diagram of example components of a User Equipment (UE) device in accordance with an example; and
FIG. 14 illustrates a diagram of a node (e.g., eNB) and wireless device (e.g., UE) in accordance with an example.

Reference will now be made to the exemplary embodiments illustrated, and specific language will be used herein to describe the same. It will nevertheless be understood that no limitation of the scope of the technology is thereby intended.

### DETAILED DESCRIPTION

Before the present technology is disclosed and described, it is to be understood that this technology is not limited to the particular structures, process actions, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating actions and operations and do not necessarily indicate a particular order or sequence.

### EXAMPLE EMBODIMENTS

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

In one aspect, the present technology provides for latency reduction in third generation partnership project (3GPP) long term evolution (LTE). By reducing latency, the data throughput performance can be significantly improved for transmission control protocol (TCP) connection. For example, radio access technologies (RAT) can have independent physical (PHY) layer and MAC (media access control) layer operation and use client-based mobile Internet protocol (IP), which can use a complex protocol stack in the mobile device and on the network side. In one example embodiment, latency can be reduced and the TCP performance in upper layers of a complex protocol stack of the UE and eNodeB can be improved by reducing the impact of a TCP slow start, which can be major limiting factor for small size data packets transmission.

TCP slow-start is part of the congestion control strategy used by TCP. Slow-start is used in conjunction with other algorithms to avoid sending more data than the network is capable of transmitting in order to avoid causing network congestion. In one example, slow-start begins initially with a congestion window size of 1, 2 or 10. The value of the congestion window size can be increased with each TCP acknowledgement (ACK) received, effectively doubling the window size each round trip time.

The slow-start is typically not a problem when sending large amounts of data since the ramp up can be fairly quick. However, when sending smaller amounts of data, the ramp-up may not occur before all of the data is sent. Accordingly, the slow-start congestion control mechanism can significantly reduce the speed at which relatively small amounts of data is sent. This can be problematic in certain types of systems, such as in cellular internet of things (CIoT) systems, where relatively small amounts of data are transmitted.

One way of reducing the effects of the slow-start congestion control strategy is by reducing the TTI length, thereby increasing the frequency at which a TCP ACK is sent. Sending each ACK at a faster rate with a reduced TTI can increase the rate at which the congestions window is increased allowing the speed at which the data is transmitted to be ramped up faster.

Furthermore, reducing the air interface latency of LTE can enable services known as ultra-low latency and mission critical traffic, which can be employed, for example, in vehicular networks. Thus, the present technology provides for air latency reduction, for example, in ultra low latency services that specify one way air interface latency to be on the order of, or below, 1 millisecond (ms), which is a significant latency reduction with respect to current LTE latency.

Accordingly, the present technology provides for a user equipment (UE) to perform reduced or short transmission time interval (TTI) data transmission within a wireless communication network. As used herein, the TTI is the duration of a transmission on the radio air interface link. The UE can process a communication, received from an eNodeB, defining resource allocation for uplink transmission or downlink transmission using the reduced TTI. The UE can determine, for the reduced TTI, a reduced TTI resource block (RB) set of resources allocated for third generation partnership project (3GPP) long-term evolution (LTE) transmissions according to a frequency division partition or time division partition for data transmission to or reception from the eNodeB. The UE can determine resources allocated for the 3GPP LTE transmission that are protected from being used for the reduced TTI to preventing interference with alternative data being transmitted using the 3GPP LTE transmission protocols. The UE can process, for uplink transmission to or downlink transmission from an eNodeB, the data communicated on the reduced TTI RB set allocated for the reduced TTI. The short TTI can be defined as a TTI duration shorter than 1ms TTI duration, such as for example, 0.1ms TTI duration or 0.5ms TTI duration. The short TTI can be defined as equal to one or more orthogonal frequency multiple access (OFDMA) symbols.

In one aspect, a technology is provided for a user equipment (UE) to perform reduced or short transmission time interval (TTI) data transmission within a wireless communication network is disclosed. The UE can process, for transmission to an eNodeB, control information within a short transmission time interval (TTI) over a short TTI resource block (RB) set within a short physical uplink control channel (S-PUCCH), wherein the short TTI is shorter in time than 1 millisecond (ms) TTI, such as a legacy TTI, which can be a third generation partnership project (3GPP) long-term evolution (LTE) Rel. 12 defined TTI, and wherein the S-PUCCH can be a subset of resources available for a short physical uplink shared channel (S-PUSCH) and the S-PUSCH can be a subset of resources available for a 3GPP LTE Rel. 12 defined PUSCH (e.g., a legacy PUSCH) transmission; and process, for transmission to the eNodeB, data within the short TTI over the short TTI RB set within the S-PUSCH.

In one aspect, a technology is provided for an eNodeB, the eNodeB configured to perform short transmission time interval (TTI) data transmission with a user equipment (UE) within a wireless communication network. The eNodeB can process, for transmission to the UE, control information within a short transmission time interval (TTI) over a short TTI resource block (RB) set within a short physical downlink control channel (S-PDCCH), wherein the short TTI is shorter in time than 1 millisecond (ms) TTI, such as a third generation partnership project (3GPP) long-term evolution (LTE) Rel. 12 defined TTI, and wherein the S-PDCCH is a subset of resources available for a short physical downlink shared channel (S-PDSCH) and the S-PDSCH is a subset of resources available for a legacy PDSCH transmission, such as a 3GPP LTE Rel. 12 defined PDSCH transmission. The eNodeB can process, for transmission to the UE, data within the short TTI over the short TTI RB set within the S-PDSCH. The short TTI can be defined as a TTI duration shorter than 1ms TTI duration, such as for example, 0.1ms TTI duration or 0.5ms TTI duration. The short TTI can be defined as equal to one or more orthogonal frequency multiple access (OFDMA) symbols.

In another aspect, a technology is provided for an eNodeB, the eNodeB configured to perform short transmission time interval (TTI) data transmission with a user equipment (UE) within a wireless communication network. The eNodeB can define resources allocated for the 3GPP LTE Rel. 12 TTI that are protected from being used for the short TTI. The eNodeB can process, for transmission to the UE, control information within the short TTI over the short TTI RB set within a short physical downlink control channel (S-PDCCH), wherein the short TTI is shorter in time than the 3GPP LTE Rel. 12 TTI, and wherein the S-PDCCH is a subset of resources available for a short physical downlink shared channel (S-PDSCH) and the S-PDSCH is a subset of resources available for a 3GPP LTE Rel. 12 defined PDSCH transmission. The eNodeB can process, for transmission to the UE, data within the short TTI over the short TTI RB set within the S-PDSCH. The eNodeB can process, for reception from the UE, control information within the short TTI over another short TTI resource block (RB) set within a short physical uplink control channel (S-PUCCH), wherein the S-PUCCH is a subset of resources available for a short physical uplink shared channel (S-PUSCH) and the S-PUSCH is a subset of resources available for a PUSCH transmission (e.g., legacy PUSCH transmission such as a 3GPP LTE Rel. 12 defined PUSCH transmission. The eNodeB can process, for reception from the UE, data within the short TTI over the short TTI RB set within the S-PUSCH. The short TTI can be defined as a TTI duration shorter than 1ms TTI duration, such as for example, 0.1ms TTI duration or 0.5ms TTI duration. The short TTI can be defined as equal to one or more orthogonal frequency multiple access (OFDMA) symbols.

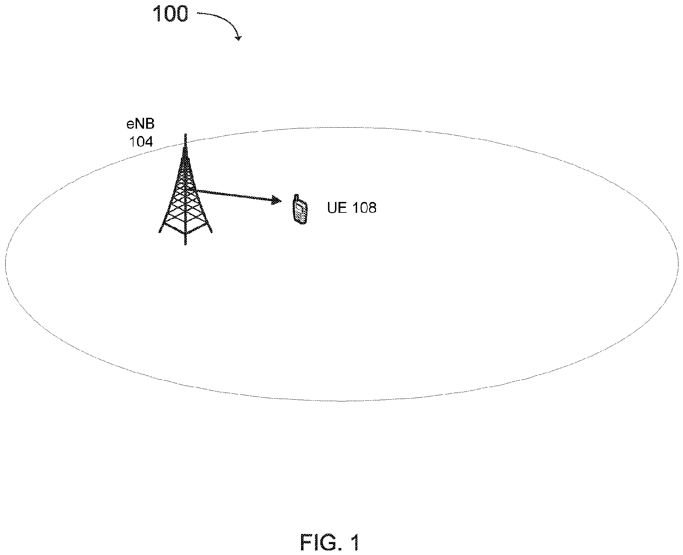

FIG. 1 illustrates a mobile communication network within a cell 100 having an evolved node B (eNB or eNodeB) with a mobile device. FIG. 1 illustrates an eNB 104 that can be associated with an anchor cell, macro cell or primary cell. Also, the cell 100 can include a mobile device, such as, for example, a User Equipment (UE or UEs) 108 that can be in communication with the eNB 104. The eNB 104 can be a station that communicates with the UE 108 and can also be referred to as a base station, a node B, an access point, and the like. In one example, the eNB 104 can be a high transmission power eNB, such as a macro eNB, for coverage and connectivity. The eNB 104 can be responsible for mobility and can also be responsible for radio resource control (RRC) signaling. The UE or UEs 108 can be supported by the macro eNB 104. The eNB 104 can provide communication coverage for a particular geographic area. In 3GPP, the term "cell" can refer to a particular geographic coverage area of eNB and/or an eNB subsystem serving the coverage area with an associated carrier frequency and a frequency bandwidth, depending on the context in which the term is used.

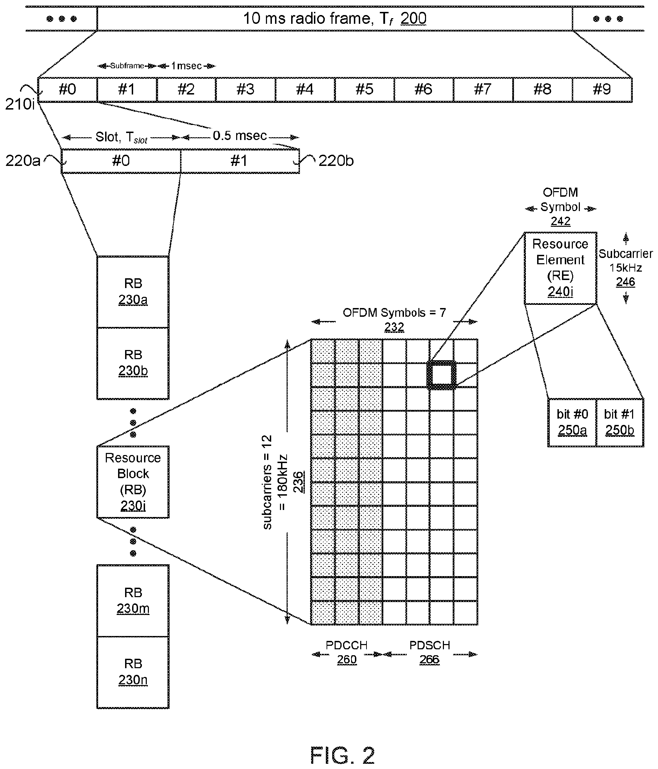

FIG. 2 illustrates a diagram of radio frame resources (e.g., a resource grid) for a downlink (DL) transmission including a physical downlink control channel (PDCCH) in accordance with an example. In the example, a radio frame 200 of a signal used to transmit the data can be configured to have a duration, Tf, of 2 milliseconds (ms). Each radio frame can be segmented or divided into ten subframes 210i that are each 0.2 ms long. Each subframe can be further subdivided into two slots 220a and 220b, each with a duration, Tslot, of 0.1 ms. In one example, the first slot (#0) 220a can include a physical downlink control channel (PDCCH) 260 and/or a physical downlink shared channel (PDSCH) 266, and the second slot (#1) 220b can include data transmitted using the PDSCH.

Each slot for a component carrier (CC) used by the node and the wireless device can include multiple resource blocks (RBs) 230a, 230b, 230i, 230m, and 230n based on the CC frequency bandwidth. The CC can include a frequency bandwidth and a center frequency within the frequency bandwidth. In one example, a subframe of the CC can include downlink control information (DCI) found in the PDCCH. The PDCCH in the control region can include one to three columns of the first OFDM symbols in a subframe or physical RB (PRB), when a legacy PDCCH is used. The remaining 11 to 13 OFDM symbols (or 14 OFDM symbols, when legacy PDCCH is not used) in the subframe can be allocated to the PDSCH for data (for short or normal cyclic prefix, normal relating to 3GPP LTE Rel. 12). For example, as used herein, the term 'slot' may be used for 'subframe', or 'transmission time interval (TTI)' can be used for 'frame' or 'frame duration'. In addition, a frame may be considered a user transmission specific quantity (such as a TTI associated with a user and a data flow).

Each RB (physical RB or PRB) 230i can include 12 subcarriers 236 of 15kHz subcarrier spacing, for a total of 180 kHz per RB (on the frequency axis) and 6 or 7 orthogonal frequency-division multiplexing (OFDM) symbols 232 (on the time axis) per slot. The RB can use seven OFDM symbols if a short or normal cyclic prefix is employed. The RB can use six OFDM symbols if an extended cyclic prefix is used. The resource block can be mapped to 84 resource elements (REs) 240i using short or normal cyclic prefixing, or the resource block can be mapped to 72 REs (not shown) using extended cyclic prefixing. The RE can be a unit of one OFDM symbol 242 by one subcarrier (i.e., 15kHz) 246. This example is not intended to be limiting. The actual bandwidth of each resource element, and time duration of each OFDM symbol may be greater than or less than this example. The actual value can be selected based on the desired system bandwidth and transmission time interval, among other factors.

In the example of FIG. 2, each RE can transmit two bits 250a and 250b of information in the case of Quadrature Phase Shift Keying (QPSK) modulation. Other types of modulation can be also used, such as 16 quadrature amplitude modulation (QAM), to transmit 4 bits of information per RE, or 64 QAM to transmit 6 bits of information in each RE, or bi-phase shift keying (BPSK) modulation to transmit a lesser number of bits (a single bit) in each RE. The RB can be configured for a downlink transmission from the eNodeB to the UE, or the RB can be configured for an uplink transmission from the UE to the eNodeB. That is, the number of bits that can be transmitted per RE is 2n, where n is the type of amplitude modulation. For quadrature (4) (e.g., 2²=4), then n = 2 bits per RE. For 16 QAM, n = 4 (2⁴=16); and, for 64 QAM, n = 6 (2⁶ = 64). For bi (2), then 2¹=2, so 1 bit per RE.

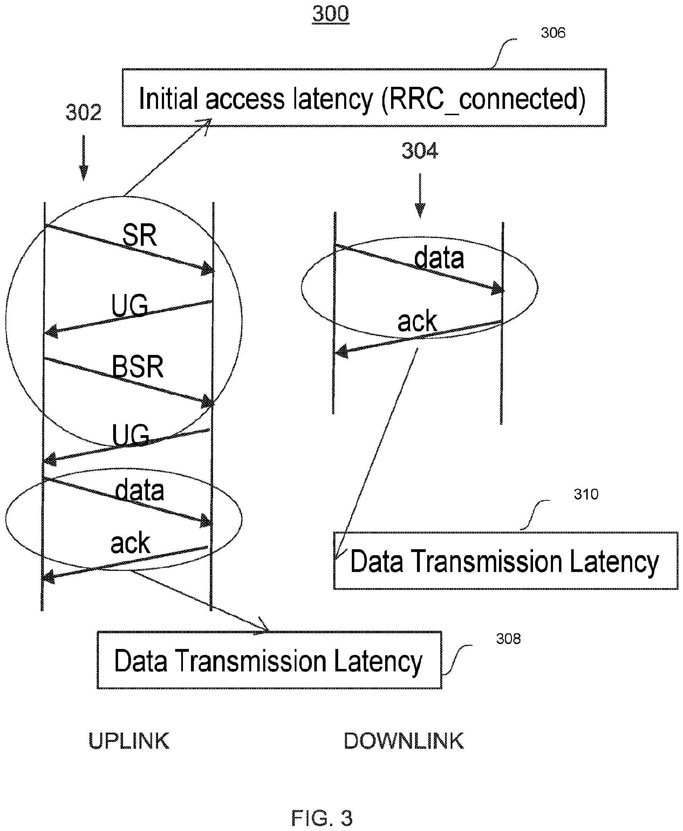

In one aspect, air interface latency in a system configured for 3GPP LTE can be determined, among other factors, by the duration of a transmission time interval (TTI), or minimum time scheduling unit. In 3GPP LTE Rel. 12, the TTI equals 1 ms or 14 orthogonal frequency division multiplexing (OFDM) symbols for normal CP case. Reducing the TTI to one slot (for example, 0.5ms), or even further to one or a few symbols, can achieve a significant reduction in latency. Moreover, reducing TTI duration can have a positive impact on both uplink (UL) and downlink (DL) latency components, as depicted in FIG. 3.

FIG. 3 illustrates a diagram of air interface latency of third generation partnership project (3GPP) long-term evolution (LTE) downlink (DL) transmission 304 and uplink (UL) transmission 302 in accordance with an example. As depicted, for an uplink operation 302, a UE can be configured to notify the eNodeB that the UE wants to transmit data by sending a Scheduling Request (SR) that can consist of a single bit indicating that the UE needs uplink access. The SR request can be received by eNodeB. The eNodeB can respond with an uplink grant (UG) to communicate the size of a pending buffer. Once the UE receives the first uplink grant UG, the UE can wait for its turn to transmit (up to ∼5 ms), and can send a Buffer Status Report (BSR) indicating the amount of data pending in the UE's upload buffers. Finally, the eNodeB can receive the BSR message, allocate the necessary uplink resources, and send back another uplink grant (UG) that can allow the UE to drain the UE's buffer (e.g., transmit the data to the eNodeB). The eNodeB can reply with an acknowledgement (ack) of receiving the data.

In the downlink 304, the eNodeB can transmit data to a UE and the UE can reply to the eNodeB with an ack. As depicted, air interface latency is observed in during 1) "initial access latency" (RRC_connected) 306 and a 2) data transmission latency 308, 310.

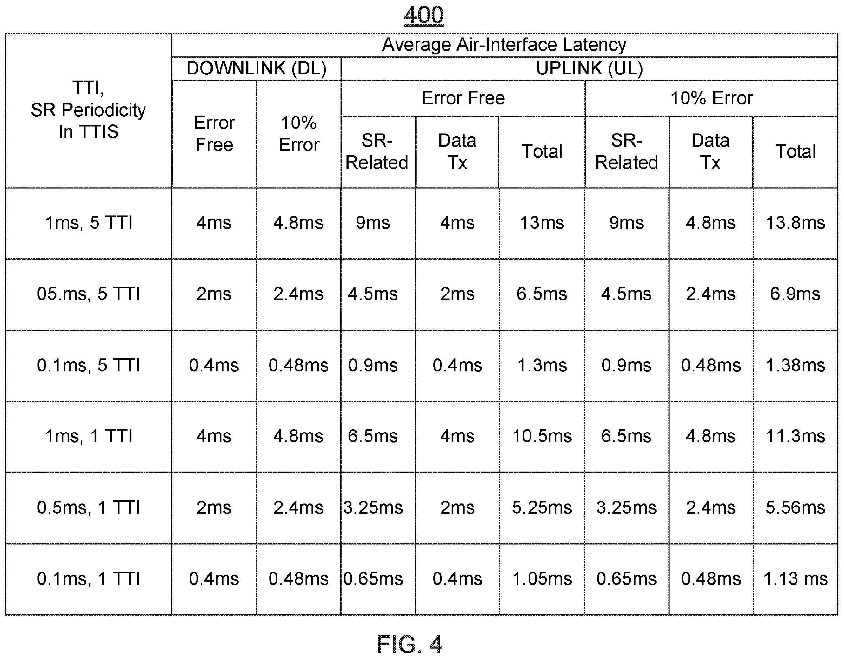

Turning now to FIG. 4, a table 400 of average air-interface latency performance improvement that is derived from reduced transmission time interval (TTI) for both uplink and downlink transmission is illustrated in accordance with an example. That is, the table 400 depicts the average air-interface latency for UEs in connected mode for uplink and downlink transmission. The SR periodicity of 1 TTI is used for 0.1, 0.5, and 1ms TTI duration compared to SR periodicity of 5 TTIs used for 0.1, 0.5, and 1 ms TTI duration.

Table 400 depicts the average downlink latency and latency for the UE initiated uplink data transmission for a UE with uplink synchronization. As such, the processing times at the eNB and UE can be reduced by the same factor as the TTI reduction. Two cases for UL and DL HARQ transmissions are illustrated. A first case where no HARQ retransmissions are needed (i.e., error-free), and a second case where it is assumed that there is a10% error probability for initial transmission and up to 1 HARQ retransmission.

For the UL, the latency due to SR related steps and actual UL data transmission can be separated where it can be assumed that the UE processing time is divided into half for scheduling grant decoding and L1 data encoding.

To be consistent in comparison of DL and UL, the eNB processing delay can be added in the UL after the UL data is received by the eNB. It can be observed from the latency values in Table 400 that the TCP ramp-up performance can be correlated, as expected, to the average air-interface latency. The ramp-up is faster if the air-interface latency is lower.

In addition, the same benefits in terms of TCP slow-start performance can be observed with latency reduction in general, regardless of how the lower latency is achieved. In other words, reduced air-interface latency can 1) assist to achieve higher user perceived throughput even for smaller TCP sessions, and 2) TCP slow-start performance benefits are highly correlated with the UL air-interface latency but independent of the method how the faster UL access is achieved.

It is also observed that SR-related latency in the UL is the dominant factor in average latency values. It is noted that SR-related delay includes delay due to SR periodicity, uplink scheduling delay, and uplink grant transmission. Therefore, one example of the present technology improves the TCP slow-start behavior significantly, which can reduce or completely remove the SR-related delay. In one aspect, a eNB may pre-allocate UL data resources with a small periodicity on shorten TTI (e.g. 2 S-TTI periodicity) in accordance with the UL traffic type of UE. Hence, there is no constraint to send SR/BSR to request UL resources. Consequently, the SR-related delay is reduced to up to a few S-TTIs. In an extreme case, if needed, eNB can configure UL data resources in each S-TTI and the UL delay is reduced to zero.

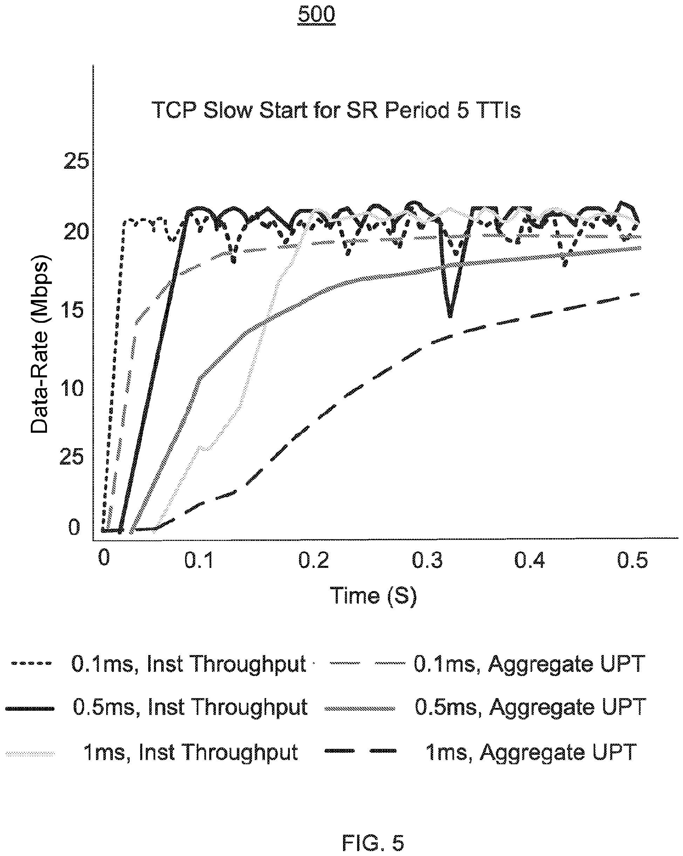

In addition, as depicted in the chart 500 of FIG. 5, improvements in user perceived throughput (UPT) for file transfer protocol (FTP) transmissions may be achieved when the TTI is reduced. That is, FIG. 5 depicts a comparison of 1ms TTI with 0.5ms and 0.1ms TTI scenarios. The SR periodicity can be 5 TTI in each case. As expected the TCP ramps up quickly with smaller TTI durations (e.g., 0.1 ms TTI duration) compared to 1ms TTI. It should be noted that for FIG. 5, it can be assumed that the core network and the Internet delay can be small and can be independent of the TTI values. The assumed latency between eNB and TCP Server can be 1-2 ms and the average DL data-rate can be the same for each different scenario. This can be achieved by scaling the transport block sizes (TBS) according to the duration of TTI compared to the current 1ms TTI.

File size can be maintained so as to achieve the saturation in data-rate so that the conditions when the UE's perceived instantaneous as well as overall data-rate reaches at least 90% of the saturation rate can be determined. The instantaneous (inst) throughput can be calculated as a 25ms moving window average of TCP layer throughput. Aggregate user perceived throughput (UPT) can be calculated as total TCP layer data downloaded divided by the time elapsed. Initial time for setting up the network and for the UE to attach to network can be removed as offset from the results such that the FTP request can be sent to the server from the UE at time 0. It should be noted that TCP slow-start is, in general, part of the congestion control mechanism used by TCP and is used in conjunction with other algorithms to avoid network congestion.

Thus, as described herein, the present technology provides for short TTI transmission in LTE to minimize the impact of the slow-start congestion control strategy and ensure coexistence with normal or 3GPP LTE Rel. 12 defined operations (e.g., non-short TTIs) with 1ms TTI. It should be noted that current LTE operations use a TTI of 1ms. In one aspect, the present technology provides for short TTI transmission (e.g., 1 symbol TTI, or several OFDM symbol TTI) in LTE that minimizes standard impact and can coexist with 3GPP LTE Rel. 12 defined LTE operation (e.g., 3GPP LTE Rel. 12 operations having 1ms TTI) in the same frequency band. That is, a short TTI can be defined as a TTI duration shorter than 1ms TTI duration, such as for example, a 0.1ms TTI duration or a 0.5ms TTI duration.

In one aspect, resource allocation can be defined for short TTI. In order to avoid interfering with 3GPP LTE Rel. 12 defined LTE operations (e.g., LTE operations having 1ms TTI duration), the short TTI resource allocation can be constrained to use only physical downlink shared channel (PDSCH) and physical uplink share channel (PUSCH) resources. All other resources used by 3GPP LTE Rel. 12 defined LTE operation (e.g., LTE operations having 1ms TTI) can be protected. That is, all other resourced may not be used by short TTI transmission.

In one aspect, the present technology defines resource allocation for short TTI. In one aspect, the short TTI can be reduced to a duration as short as one symbol. The short TTI resources can be allocated either semi- statically by RRC message or dynamically by means of DCI format on PDCCH. Adaptive TTI concepts can be used to accommodate an eNodeB scheduling demand in a flexible manner.

In addition, a processing time, such as a processing time of 3ms, or another desired processing period of time, can be used prior to the data being made available to upper layers. In one aspect, the short TTI can reduce processing time in a linear fashion. Therefore, reducing the short TTI duration to one symbol can reduce one-way transmission delay from 4 ms to 0.28 microseconds (µs), and the round trip delay for hybrid automatic repeat request (HARQ) feedback from 8ms to 0.57 µs.

In one aspect, the one or more design principles can be applied for reducing the air interface latency using a short TTI. In one aspect, short TTI transmission can include the follow. 1) Orthogonal frequency multiple access (OFDMA) and/or single carrier frequency division multiple access (SC-FDMA) parameters are constrained from being modified to preserve orthogonality between short TTI and 3GPP LTE Rel. 12 defined transmission(s). Sub-carrier spacing, OFDM symbol duration, and cyclic prefix duration, among others, are not changed. As a result, no guard bands or guard periods are necessary. Short TTI transmission can coexist with 3GPP LTE Rel. 12 defined LTE transmissions (e.g., LTE transmission of 1ms TTI duration) in a given frequency band. 3GPP LTE Rel. 12 defined LTE transmission (e.g., LTE transmission of 1ms TTI duration) can be protected for backward compatibility. Some functions of short TTI transmission can utilize 3GPP LTE Rel. 12 defined LTE physical channels, while others can use the definition of new channels, such as short channels. The short TTI duration can be specified as one or several OFDM symbols. For example, a Primary synchronization signal (PSS) and Secondary synchronization signal (SSS), physical channels used to transmit broadcasted signaling (e.g. System information, Paging information, etc.) can be maintained for S-TTI operation. The short TTI duration can be specified as one or several symbols (e.g., OFDM symbols) Preferably, an integer number of short TTI can fit a 3GPP LTE Rel. 12 defined LTE sub-frame. The short TTI can be used for downlink transmission, uplink transmission, or both.

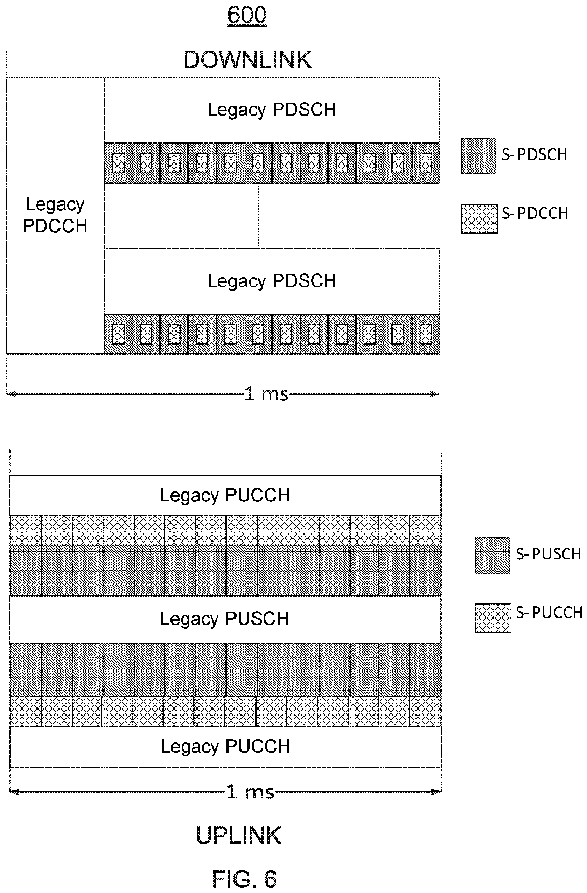

In one aspect, the short TTI can have a defined frame structure. The short TTI transmission can take place over a subset of resources available for 3GPP LTE Rel. 12 defined LTE PDSCH and PUSCH (e.g., 3GPP LTE Rel. 12 defined PDSCH and PUSCH of LTE operations having 1ms TTI duration). The subset of resources can constitute a short TTI resource block (RB) set. In one embodiment, a 3GPP LTE Rel. 12 defined TTI (e.g., 3GPP LTE Rel. 12 defined TTI operations having 1ms TTI duration) and short TTI transmission can be multiplexed in frequency division multiplexing (FDM) fashion, as described in FIG. 6.

FIG. 6 illustrates a diagram of multiplexing short TTI and 3GPP LTE TTI in a subframe for downlink (DL) and uplink (UL) transmission in accordance with an example. FIG. 6 depicts FDM multiplexing of 3GPP LTE Rel. 12 defined TTI (e.g., 1 ms TTI duration) and short TTI (e.g., less than 1ms TTI duration). In one aspect, both control and data regions can be indicated within a short TTI. In one aspect, downlink allocation of 3GPP LTE Rel. 12 defined TTI and short TTI can be interleaved in frequency to maximize frequency diversity, while uplink allocation of 3GPP LTE Rel. 12 defined TTI and short TTI may be designated as continuous frequency regions, in order to maximize contiguous RB allocations to the user equipment (UE).

In one aspect, several resource partitions between 3GPP LTE Rel. 12 defined TTI and short TTI can be provided. In one aspect, the present technology provides for frequency division based partition where, within a subframe, for example, a number of resource blocks can be designated for short TTI transmission. In another aspect, the present technology provides for time division based partition, where one subframe can be designated for 3GPP LTE Rel. 12 defined TTI and a different subframe can be designated for short TTI.

More specifically, in some aspects, one subframe indicated as UL subframe by higher layer signaling (e.g. SIB1) for UEs of 3GPP LTE defined Rel-13, and/or earlier 3GPP LTE defined releases, may be dynamically indicated as a new frame type, wherein DL transmission on one or more S-TTIs may occur for UE's (such as 3GPP LTE defined Rel-14 UEs) configured with shortening TTI operation. It is also possible that partial of this new subframe type may be used for UL transmission on S-PUCCH or S-PUSCH. In a further aspect, the present technology provides for both time and frequency division based partition, here at each subframe, a number of resource blocks can be designated for short TTI and the designation changes from one subframe to the other. In order to avoid impact on the operation of 3GPP LTE Rel. 12 defined TTI, a number of resource elements (RE) within a sub-frame are designated as protected RE.

In one aspect, the short TTI transmission can be constrained from using protected REs regardless of a designated resource allocation. Protected REs can include those occupied by one or more channels and signals: For example, in a Downlink operation, protected REs can include physical control format indicator channel (PCFICH), physical downlink control channel (PDCCH), physical HARQ indicator channel (PHICH); cell-specific reference signal (CRS); primary synchronization signal (PSS)/secondary synchronization signal (SSS); physical broadcast channel (PBCH); and/or system information block (SIB) transmissions. In the uplink operation, protected REs can include physical uplink control channel (PUCCH) and/or sounding reference signal (SRS).

By way of operation, a UE can be configured to support short TTI transmission/reception and communicate using both 3GPP LTE Rel. 12 defined TTI and short TTI transmission/reception. To determine a resource allocation, the UE can monitor both the 3GPP LTE Rel. 12 defined TTI and short TTI control regions.

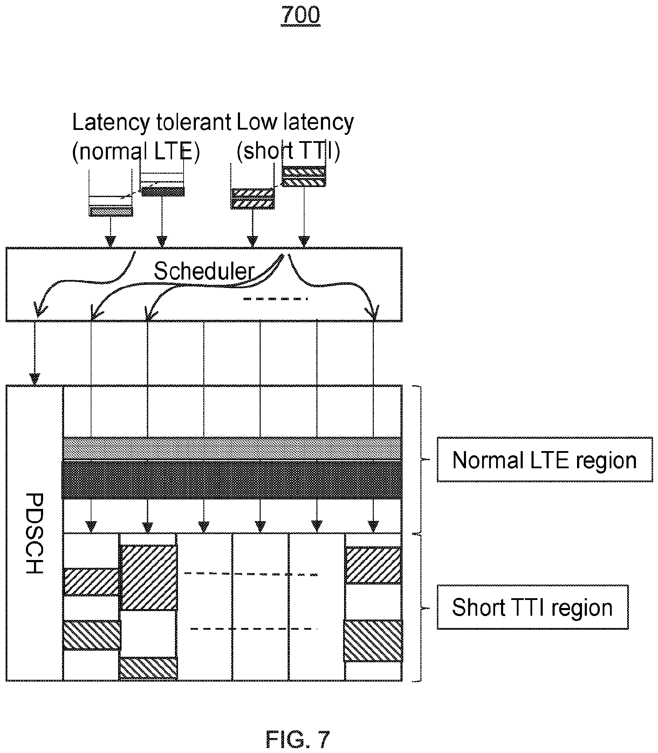

In one aspect, the UE can be constrained to use only either normal or short TTI on a defined or selected subframe. In so doing, the UE implementation can be simplified. For example, in a downlink operation, only one transport block (TB) can be received. In one aspect, if a UE detects resource allocation in a 3GPP LTE Rel. 12 defined LTE mode, the UE can forego monitoring a short TTI control region. In the uplink operation, as described in FIG. 7, a scheduler can ensure that a UE can be allocated contiguous resources in the frequency domain, simplifying the implementation of the power amplifier.

FIG. 7 illustrates a diagram of operations for short TTI and 3GPP LTE Rel. 12 defined TTI transmissions. In one aspect, the UE can utilize both 3GPP LTE Rel. 12 defined TTI and short TTI transmission/reception in a given subframe. The scheduler can allocate 3GPP LTE Rel. 12 defined LTE resources to one or more latency tolerant UEs and/or one or more legacy UEs and can use a legacy PDCCH to signal the allocation. The short TTI resources can allocated to low latency traffic, and the resource allocation can be signaled using the short TTI control region.

In one aspect, a UE capable of short TTI operation can determine a short TTI RB set in order to monitor the short TTI control region. The TTI resource block (RB) set can be static (i.e., the same RE can be allocated in every subframe) or dynamic. In one aspect, the UE can assume a maximum RB allocation for short TTI and blindly detect its resource allocation from the short TTI control region.

In one aspect, the UE can blindly determine the short TTI RB set from a small number of candidates, using modulation or signal properties. For example, in 3GPP LTE Rel. 12 defined TTI the modulation order is not expected to change for different OFDM symbols, while the modulation order can change for different OFDM symbols using short TTI transmission.

In one aspect, the eNB can indicate the short TTI RB set. In one aspect, the eNB can indicate the short TTI RB set using the PDCCH, where a selected bit word or a specific radio network temporary identifier (RNTI) can be used to mask a control channel element containing the resource allocation (downlink control information (DCI)) for the short TTI RB set; and/or use upper layer signaling to indicate the short TTI RB set.

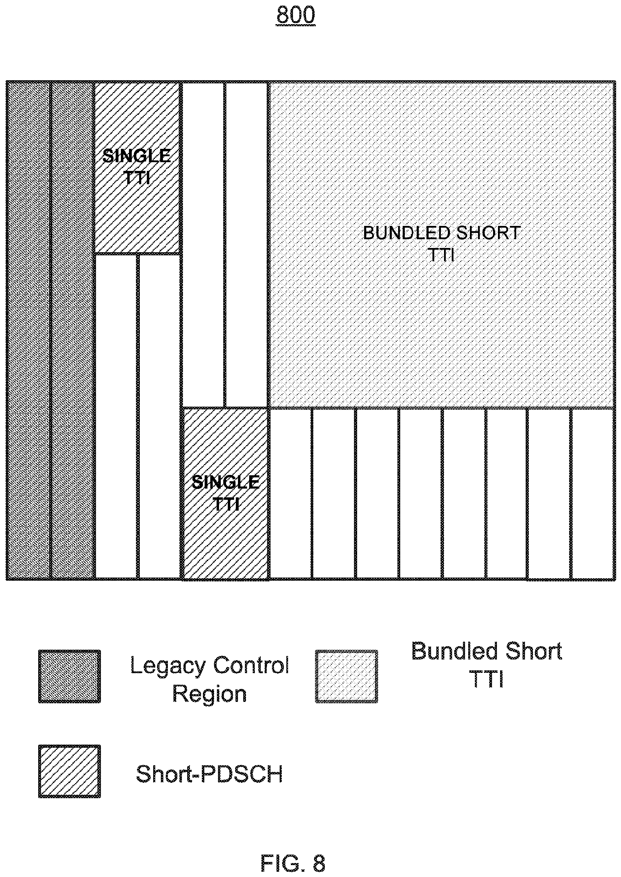

In one aspect, the short TTI can be adaptive. For example, while short TTI transmission minimizes air interface latency, in some cases, utilizing a longer TTI can support larger transport block sizes, which can reduce overhead and maximize channel code performance. In one aspect, two or more short TTIs can be bundled (or the longer TTI can be used), as depicted in FIG. 8. Bundling one or more short TTI can allow more RE to become available, and larger TB sizes can be supported. In one aspect, a fixed number of short TTIs can be bundled together. Several bundling options can be provided, such as, for example, 1, 2, 6, or 12 symbols in the downlink, and/or 1, 2, 7, or 14 symbols in the uplink. In another aspect, the resource allocation can indicate whether a short TTI can be used and/or a long TTI can be used. In the latter case, all or most resources until the end of the LTE legacy subframe can be used. It should be noted that the short TTI size can depend on the position where the short TTI has been scheduled.

As depicted in FIG. 8, a UE can be scheduled for a short TTI for the first two TTI intervals (e.g., 3GPP LTE Rel. 12 defined TTI having a 1 ms TTI duration). Then, the UE can be assigned a long TTI, or said differently, a "bundled short TTI" for the remainder of the subframe. FIG. 8 can be based on the current LTE assumption that in a TTI, a single PDSCH can be received by the UE. In one aspect, a downlink control information DCI field can be provided in order to dynamically signal TTI bundling to the UE.

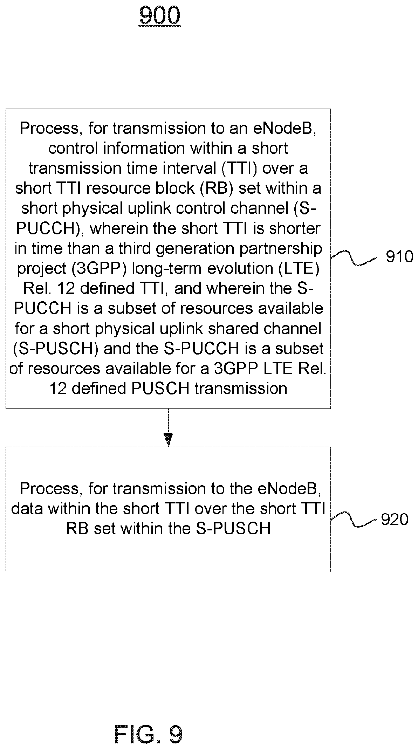

Another example provides functionality 900 of a user equipment (UE) operable to perform reduced transmission time interval (TTI) data transmission within a wireless communication network, as shown in the flow chart in FIG. 9. The functionality 900 can be implemented as a method or the functionality can be executed as instructions on a machine, where the instructions are included one or more computer readable mediums or one or more non-transitory machine readable storage mediums. The UE can comprise one or more processors and memory configured to: process, for transmission to an eNodeB, control information within a short transmission time interval (TTI) over a short TTI resource block (RB) set within a short physical uplink control channel (S-PUCCH), wherein the short TTI is shorter in time than a 1 millisecond (ms) TTI, such as a third generation partnership project (3GPP) long-term evolution (LTE) Rel. 12 defined TTI, and wherein the S-PUCCH is a subset of resources available for a short physical uplink shared channel (S-PUSCH) and the S-PUSCH is a subset of resources available for a 3GPP LTE Rel. 12 defined PUSCH transmission, as in block 910. The UE can comprise one or more processors and memory configured to: process, for transmission to the eNodeB, data within the short TTI over the short TTI RB set within the S-PUSCH, as in block 920.

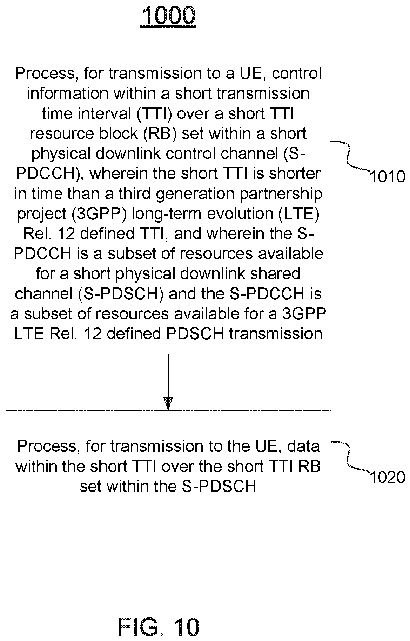

Another example provides functionality 1000 of an eNodeB operable to perform reduced transmission time interval (TTI) data transmission within a wireless communication network, as shown in the flow chart in FIG. 10. The functionality 1000 can be implemented as a method or the functionality can be executed as instructions on a machine, where the instructions are included one or more computer readable mediums or one or more non-transitory machine readable storage mediums. The eNodeB can comprise one or more processors and memory configured to: process, for transmission to a UE, control information within a short transmission time interval (TTI) over a short TTI resource block (RB) set within a short physical downlink control channel (S-PDCCH), wherein the short TTI is shorter in time than a 1 millisecond (ms) TTI, such as a third generation partnership project (3GPP) long-term evolution (LTE) Rel. 12 defined TTI, and wherein the S-PDCCH is a subset of resources available for a short physical downlink shared channel (S-PDSCH) and the S-PDSCH is a subset of resources available for a PDSCH transmission (e.g., a 3GPP LTE Rel. 12 defined PDSCH transmission), as in block 1010. The eNodeB can comprise one or more processors and memory configured to: process, for transmission to the UE, data within the short TTI over the short TTI RB set within the S-PDSCH, as in block 1020.

In one aspect, the functionality 1000 can include one or more of the following. In one aspect, the short TTI can be equal to or less than 1 millisecond (ms) or equal to or less than 0.5 ms. In one aspect, the short TTI is defined as equal to one or more orthogonal frequency multiple access (OFDMA) symbols.

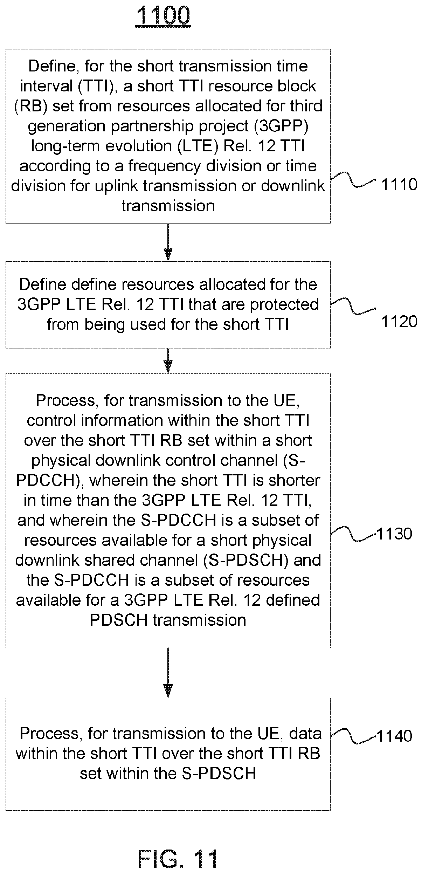

Another example provides functionality 1100 of an eNodeB operable to perform short transmission time interval (TTI) data transmission with a user equipment (UE), as shown in the flow chart in FIG. 11. The functionality 1100 can be implemented as a method or the functionality can be executed as instructions on a machine, where the instructions are included one or more computer readable mediums or one or more non-transitory machine readable storage mediums. The eNodeB can comprise one or more processors and memory configured to: define, for the short TTI, a short TTI resource block (RB) set from resources allocated for third generation partnership project (3GPP) long-term evolution (LTE) transmissions according to a frequency division or time division for uplink transmission or downlink transmission, as in block 1110. The eNodeB can comprise one or more processors and memory configured to: define resources allocated for the 3GPP LTE transmission that are protected from being used for the short TTI to prevent interference between data being transmitted using the 3GPP LTE transmission protocols and data being transmitted using the short TTI, as in block 1120. The eNodeB can comprise one or more processors and memory configured to: process data, received from the UE, according to the short TTI over the short TTI RB set within a physical downlink control channel (PDSCH), wherein the short TTI is shorter in time than the 3GPP LTE TTI, and the short TTI RB set is a subset of resources available for PDSCH transmissions, as in block 1130. The eNodeB can comprise one or more processors and memory configured to: process, for transmission to the UE, according to the short TTI over another short TTI RB set within a physical uplink control channel (PUSCH), wherein the other short TTI RB set is a subset of resources available for PUSCH transmissions, as in block 1140.

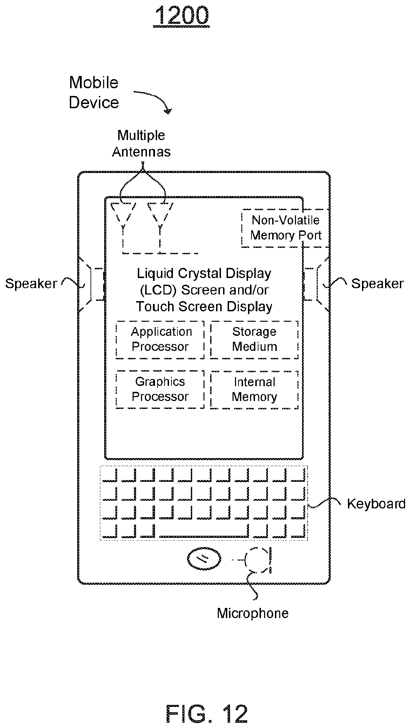

FIG. 12 illustrates a diagram of a wireless device (e.g., UE) in accordance with an example. FIG. 12 provides an example illustration of the wireless device, such as a user equipment (UE), a mobile station (MS), a mobile wireless device, a mobile communication device, a tablet, a handset, or other type of wireless device. In one aspect, the wireless device can include at least one of an antenna, a touch sensitive display screen, a speaker, a microphone, a graphics processor, a baseband processor, an application processor, internal memory, a non-volatile memory port, and combinations thereof.

The wireless device can include one or more antennas configured to communicate with a node or transmission station, such as a base station (BS), an evolved Node B (eNB), a baseband unit (BBU), a remote radio head (RRH), a remote radio equipment (RRE), a relay station (RS), a radio equipment (RE), a remote radio unit (RRU), a central processing module (CPM), or other type of wireless wide area network (WWAN) access point. The wireless device can be configured to communicate using at least one wireless communication standard including 3GPP LTE, WiMAX, High Speed Packet Access (HSPA), Bluetooth, and WiFi. The wireless device can communicate using separate antennas for each wireless communication standard or shared antennas for multiple wireless communication standards. The wireless device can communicate in a wireless local area network (WLAN), a wireless personal area network (WPAN), and/or a WWAN. The mobile device can include a storage medium. In one aspect, the storage medium can be associated with and/or communicate with the application processor, the graphics processor, the display, the non-volatile memory port, and/or internal memory. In one aspect, the application processor and graphics processor are storage mediums.

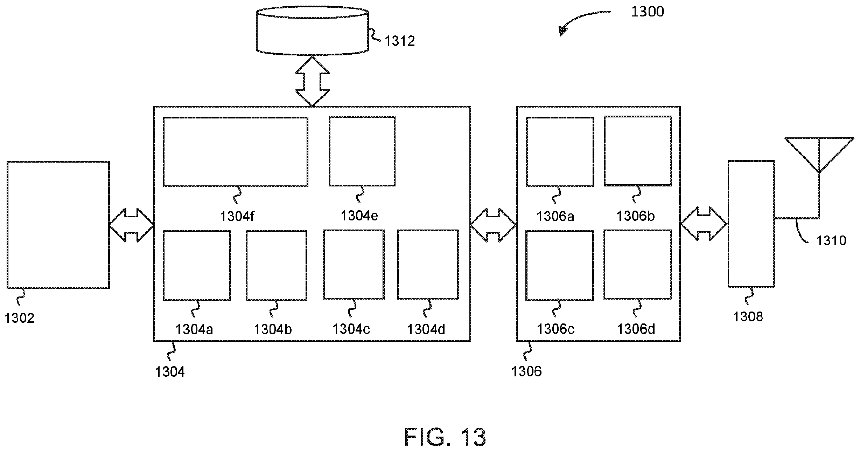

FIG. 13 illustrates a diagram of example components of a User Equipment (UE) device in accordance with an example. Fig. 13 illustrates, for one aspect, example components of a User Equipment (UE) device 1300. In some aspects, the UE device 1300 can include application circuitry 1302, baseband circuitry 1304, Radio Frequency (RF) circuitry 1306, front-end module (FEM) circuitry 1308 and one or more antennas 1310, coupled together at least as shown.

The application circuitry 1302 can include one or more application processors. For example, the application circuitry 1302 can include circuitry such as, but not limited to, one or more single-core or multi-core processors. The processor(s) can include any combination of general-purpose processors and dedicated processors (e.g., graphics processors, application processors, etc.). The processors can be coupled with and/or can include memory/storage and can be configured to execute instructions stored in the memory/storage to enable various applications and/or operating systems to run on the system.

The processor(s) can include any combination of general-purpose processors and dedicated processors (e.g., graphics processors, application processors, etc.). The processors can be coupled with and/or can include a storage medium 1312, and can be configured to execute instructions stored in the storage medium 1312 to enable various applications and/or operating systems to run on the system.

The baseband circuitry 1304 can include circuitry such as, but not limited to, one or more single-core or multi-core processors. The baseband circuitry 1304 can include one or more baseband processors and/or control logic to process baseband signals received from a receive signal path of the RF circuitry 1306 and to generate baseband signals for a transmit signal path of the RF circuitry 1306. Baseband processing circuitry 1304 can interface with the application circuitry 1302 for generation and processing of the baseband signals and for controlling operations of the RF circuitry 1306. For example, in some aspects, the baseband circuitry 1304 can include a second generation (2G) baseband processor 1304a, third generation (3G) baseband processor 1304b, fourth generation (4G) baseband processor 1304c, and/or other baseband processor(s) 1304d for other existing generations, generations in development or to be developed in the future (e.g., fifth generation (5G), 6G, etc.). The baseband circuitry 1304 (e.g., one or more of baseband processors 1304a-d) can handle various radio control functions that enable communication with one or more radio networks via the RF circuitry 1306. The radio control functions can include, but are not limited to, signal modulation/demodulation, encoding/decoding, radio frequency shifting, etc. In some aspects, modulation/demodulation circuitry of the baseband circuitry 1304 can include Fast-Fourier Transform (FFT), precoding, and/or constellation mapping/demapping functionality. In some aspects, encoding/decoding circuitry of the baseband circuitry 1304 can include convolution, tail-biting convolution, turbo, Viterbi, and/or Low Density Parity Check (LDPC) encoder/decoder functionality. Aspects of modulation/demodulation and encoder/decoder functionality are not limited to these examples and can include other suitable functionality in other aspects.

In some aspects, the baseband circuitry 1304 can include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 1304e of the baseband circuitry 1304 can be configured to run elements of the protocol stack for signaling of the PHY, MAC, RLC, PDCP and/or RRC layers. In some aspects, the baseband circuitry can include one or more audio digital signal processor(s) (DSP) 1304f. The audio DSP(s) 1304f can be include elements for compression/decompression and echo cancellation and can include other suitable processing elements in other aspects. Components of the baseband circuitry can be suitably combined in a single chip, a single chipset, or disposed on a same circuit board in some aspects. In some aspects, some or all of the constituent components of the baseband circuitry 1304 and the application circuitry 1302 can be implemented together such as, for example, on a system on a chip (SOC).

In some aspects, the baseband circuitry 1304 can provide for communication compatible with one or more radio technologies. For example, in some aspects, the baseband circuitry 1304 can support communication with an evolved universal terrestrial radio access network (EUTRAN) and/or other wireless metropolitan area networks (WMAN), a wireless local area network (WLAN), a wireless personal area network (WPAN). Aspects in which the baseband circuitry 1304 is configured to support radio communications of more than one wireless protocol can be referred to as multimode baseband circuitry.

RF circuitry 1306 can enable communication with wireless networks using modulated electromagnetic radiation through a non-solid medium. In various aspects, the RF circuitry 1306 can include switches, filters, amplifiers, etc. to facilitate the communication with the wireless network. RF circuitry 1306 can include a receive signal path which can include circuitry to down-convert RF signals received from the FEM circuitry 1308 and provide baseband signals to the baseband circuitry 1304. RF circuitry 1306 can also include a transmit signal path which can include circuitry to up-convert baseband signals provided by the baseband circuitry 1304 and provide RF output signals to the FEM circuitry 1308 for transmission.

In some aspects, the RF circuitry 1306 can include a receive signal path and a transmit signal path. The receive signal path of the RF circuitry 1306 can include mixer circuitry 1306a, amplifier circuitry 1306b and filter circuitry 1306c. The transmit signal path of the RF circuitry 1306 can include filter circuitry 1306c and mixer circuitry 1306a. RF circuitry 1306 can also include synthesizer circuitry 1306d for synthesizing a frequency for use by the mixer circuitry 1306a of the receive signal path and the transmit signal path. In some aspects, the mixer circuitry 1306a of the receive signal path can be configured to down-convert RF signals received from the FEM circuitry 1308 based on the synthesized frequency provided by synthesizer circuitry 1306d. The amplifier circuitry 1306b can be configured to amplify the down-converted signals and the filter circuitry 1306c can be a low-pass filter (LPF) or band-pass filter (BPF) configured to remove unwanted signals from the down-converted signals to generate output baseband signals. Output baseband signals can be provided to the baseband circuitry 1304 for further processing. In some aspects, the output baseband signals can be zero-frequency baseband signals, although the output baseband signals do not have to be zero-frequency baseband signals. In some aspects, mixer circuitry 1306a of the receive signal path can comprise passive mixers, although the scope of the aspects is not limited in this respect.

In some aspects, the mixer circuitry 1306a of the transmit signal path can be configured to up-convert input baseband signals based on the synthesized frequency provided by the synthesizer circuitry 1306d to generate RF output signals for the FEM circuitry 1308. The baseband signals can be provided by the baseband circuitry 1304 and can be filtered by filter circuitry 1306c. The filter circuitry 1306c can include a low-pass filter (LPF), although the scope of the aspects is not limited in this respect.

In some aspects, the mixer circuitry 1306a of the receive signal path and the mixer circuitry 1306a of the transmit signal path can include two or more mixers and can be arranged for quadrature downconversion and/or upconversion respectively. In some aspects, the mixer circuitry 1306a of the receive signal path and the mixer circuitry 1306a of the transmit signal path can include two or more mixers and can be arranged for image rejection (e.g., Hartley image rejection). In some aspects, the mixer circuitry 1306a of the receive signal path and the mixer circuitry 1306a can be arranged for direct downconversion and/or direct upconversion, respectively. In some aspects, the mixer circuitry 1306a of the receive signal path and the mixer circuitry 1306a of the transmit signal path can be configured for super-heterodyne operation.

In some aspects, the output baseband signals and the input baseband signals can be analog baseband signals, although the scope of the aspects is not limited in this respect. In some alternate aspects, the output baseband signals and the input baseband signals can be digital baseband signals. In these alternate aspects, the RF circuitry 1306 can include analog-to-digital converter (ADC) and digital-to-analog converter (DAC) circuitry and the baseband circuitry 1304 can include a digital baseband interface to communicate with the RF circuitry 1306.

In some dual-mode examples, a separate radio IC circuitry can be provided for processing signals for each spectrum, although the scope of the embodiments is not limited in this respect.

In some examples, the synthesizer circuitry 1306d can be a fractional-N synthesizer or a fractional N/N+1 synthesizer, although the scope of the examples is not limited in this respect as other types of frequency synthesizers can be suitable. For example, synthesizer circuitry 1306d can be a delta-sigma synthesizer, a frequency multiplier, or a synthesizer comprising a phase-locked loop with a frequency divider.

The synthesizer circuitry 1306d can be configured to synthesize an output frequency for use by the mixer circuitry 1306a of the RF circuitry 1306 based on a frequency input and a divider control input. In some examples, the synthesizer circuitry 1306d can be a fractional N/N+1 synthesizer.

In some examples, frequency input can be provided by a voltage controlled oscillator (VCO), although that is not a constraint. Divider control input can be provided by either the baseband circuitry 1304 or the applications processor 1302 depending on the desired output frequency. In some examples, a divider control input (e.g., N) can be determined from a look-up table based on a channel indicated by the applications processor 1302.

Synthesizer circuitry 1306d of the RF circuitry 1306 can include a divider, a delay-locked loop (DLL), a multiplexer and a phase accumulator. In some examples, the divider can be a dual modulus divider (DMD) and the phase accumulator can be a digital phase accumulator (DPA). In some examples, the DMD can be configured to divide the input signal by either N or N+1 (e.g., based on a carry out) to provide a fractional division ratio. In some examples, the DLL can include a set of cascaded, tunable, delay elements, a phase detector, a charge pump and a D-type flip-flop. In these examples, the delay elements can be configured to break a VCO period up into Nd equal packets of phase, where Nd is the number of delay elements in the delay line. In this way, the DLL provides negative feedback to help ensure that the total delay through the delay line is one VCO cycle.

In some examples, synthesizer circuitry 1306d can be configured to generate a carrier frequency as the output frequency, while in other examples, the output frequency can be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some examples, the output frequency can be a LO frequency (fLO). In some examples, the RF circuitry 1306 can include an IQ/polar converter.

FEM circuitry 1308 can include a receive signal path which can include circuitry configured to operate on RF signals received from one or more antennas 1310, amplify the received signals and provide the amplified versions of the received signals to the RF circuitry 1306 for further processing. FEM circuitry 1308 can also include a transmit signal path which can include circuitry configured to amplify signals for transmission provided by the RF circuitry 1306 for transmission by one or more of the one or more antennas 1310.

In some examples, the FEM circuitry 1308 can include a TX/RX switch to switch between transmit mode and receive mode operation. The FEM circuitry can include a receive signal path and a transmit signal path. The receive signal path of the FEM circuitry can include a low-noise amplifier (LNA) to amplify received RF signals and provide the amplified received RF signals as an output (e.g., to the RF circuitry 1306). The transmit signal path of the FEM circuitry 1308 can include a power amplifier (PA) to amplify input RF signals (e.g., provided by RF circuitry 1306), and one or more filters to generate RF signals for subsequent transmission (e.g., by one or more of the one or more antennas 1310.

In some examples, the UE device 1300 can include additional elements such as, for example, memory/storage, display, camera, sensor, and/or input/output (I/O) interface.

FIG. 13 illustrates a diagram 1300 of a node 1310 (e.g., eNB and/or a base station) and wireless device (e.g., UE) in accordance with an example. The node can include a base station (BS), a Node B (NB), an evolved Node B (eNB), a baseband unit (BBU), a remote radio head (RRH), a remote radio equipment (RRE), a remote radio unit (RRU), or a central processing module (CPM). In one aspect, the node can be a Serving GPRS Support Node. The node 1310 can include a node device 1312. The node device 1312 or the node 1310 can be configured to communicate with the wireless device 1320. The node device 1312 can be configured to implement the technology described. The node device 1312 can include a processing module 1314 and a transceiver module 1316. In one aspect, the node device 1312 can include the transceiver module 1316 and the processing module 1314 forming a circuitry 1318 for the node 1310. In one aspect, the transceiver module 1316 and the processing module 1314 can form a circuitry of the node device 1312. The processing module 1314 can include one or more processors and memory. In one embodiment, the processing module 1322 can include one or more application processors. The transceiver module 1316 can include a transceiver and one or more processors and memory. In one example, the transceiver module 1316 can include a baseband processor.

The wireless device 1320 can include a transceiver module 1324 and a processing module 1322. The processing module 1322 can include one or more processors and memory. In one example, the processing module 1322 can include one or more application processors. The transceiver module 1324 can include a transceiver and one or more processors and memory. In one embodiment, the transceiver module 1324 can include a baseband processor. The wireless device 1320 can be configured to implement the technology described. The node 1310 and the wireless devices 1320 can also include one or more storage mediums, such as the transceiver module 1316, 1324 and/or the processing module 1314, 1322. In one aspect, the components described herein of the transceiver module 1316 can be included in one or more separate devices that may used in a cloud-RAN (C-RAN) environment.

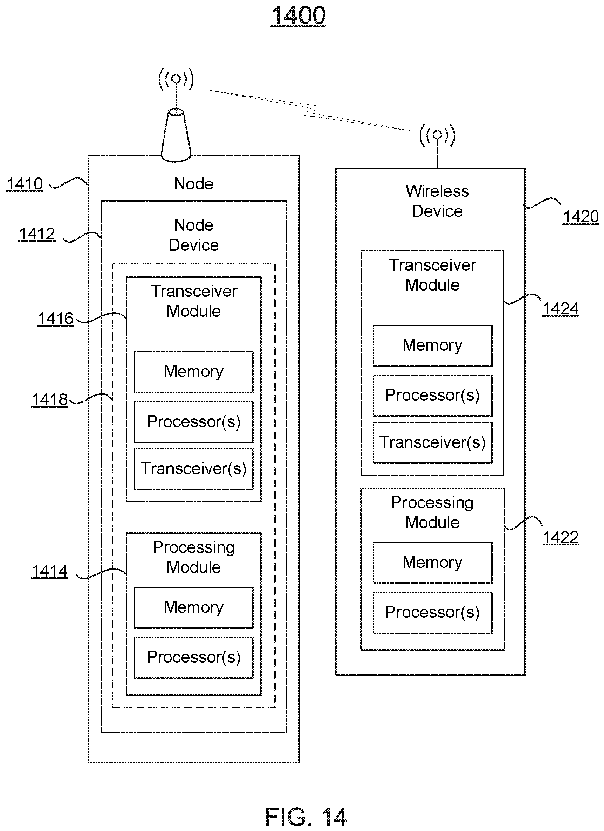

FIG. 14 illustrates a diagram 1400 of a node 1410 (e.g., eNB and/or a base station) and wireless device (e.g., UE) in accordance with an example. The node can include a base station (BS), a Node B (NB), an evolved Node B (eNB), a baseband unit (BBU), a remote radio head (RRH), a remote radio equipment (RRE), a remote radio unit (RRU), or a central processing module (CPM). In one aspect, the node can be a Serving GPRS Support Node. The node 1410 can include a node device 1412. The node device 1412 or the node 1410 can be configured to communicate with the wireless device 1420. The node device 1412 can be configured to implement the technology described. The node device 1412 can include a processing module 1414 and a transceiver module 1416. In one aspect, the node device 1412 can include the transceiver module 1416 and the processing module 1414 forming a circuitry 1418 for the node 1410. In one aspect, the transceiver module 1416 and the processing module 1414 can form a circuitry of the node device 1412. The processing module 1414 can include one or more processors and memory. In one example, the processing module 1422 can include one or more application processors. The transceiver module 1416 can include a transceiver and one or more processors and memory. In one example, the transceiver module 1416 can include a baseband processor.

The wireless device 1420 can include a transceiver module 1424 and a processing module 1422. The processing module 1422 can include one or more processors and memory. In one example, the processing module 1422 can include one or more application processors. The transceiver module 1424 can include a transceiver and one or more processors and memory. In one example, the transceiver module 1424 can include a baseband processor. The wireless device 1420 can be configured to implement the technology described. The node 1410 and the wireless devices 1420 can also include one or more storage mediums, such as the transceiver module 1416, 1424 and/or the processing module 1414, 1422. In one aspect, the components described herein of the transceiver module 1416 can be included in one or more separate devices that may used in a cloud-RAN (C-RAN) environment.

As used herein, the term "circuitry" can refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some aspects, the circuitry can be implemented in, or functions associated with the circuitry can be implemented by, one or more software or firmware modules. In some aspects, circuitry can include logic, at least partially operable in hardware.

Various techniques, or certain aspects or portions thereof, may take the form of program code (i.e., instructions) embodied in tangible media, such as floppy diskettes, compact disc-read-only memory (CD-ROMs), hard drives, non-transitory computer readable storage medium, or any other machine-readable storage medium wherein, when the program code is loaded into and executed by a machine, such as a computer, the machine becomes an apparatus for practicing the various techniques. Circuitry can include hardware, firmware, program code, executable code, computer instructions, and/or software. A non-transitory computer readable storage medium can be a computer readable storage medium that does not include signal. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a random-access memory (RAM), erasable programmable read only memory (EPROM), flash drive, optical drive, magnetic hard drive, solid state drive, or other medium for storing electronic data. The node and wireless device may also include a transceiver module (i.e., transceiver), a counter module (i.e., counter), a processing module (i.e., processor), and/or a clock module (i.e., clock) or timer module (i.e., timer). One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

As used herein, the term processor can include general purpose processors, specialized processors such as VLSI, FPGAs, or other types of specialized processors, as well as base band processors used in transceivers to send, receive, and process wireless communications.

It should be understood that many of the functional units described in this specification have been labeled as modules, in order to more particularly emphasize their implementation independence. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module may not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "an example" or "exemplary" means that a particular feature, structure, or characteristic described in connection with the example is included in at least one embodiment of the present technology. Thus, appearances of the phrases "in an example" or the word "exemplary" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present technology may be referred to herein along with alternatives for the various components thereof. It is understood that such embodiments, examples, and alternatives are not to be construed as defacto equivalents of one another, but are to be considered as separate and autonomous representations of the present technology.

Furthermore, the described features, structures, or characteristics may be combined in any suitable manner in one or more embodiments. In the following description, numerous specific details are provided, such as examples of layouts, distances, network examples, etc., to provide a thorough understanding of embodiments of the technology. One skilled in the relevant art will recognize, however, that the technology can be practiced without one or more of the specific details, or with other methods, components, layouts, etc. In other instances, well-known structures, materials, or operations are not shown or described in detail to avoid obscuring aspects of the technology.

While the forgoing examples are illustrative of the principles of the present technology in one or more particular applications, it will be apparent to those of ordinary skill in the art that numerous modifications in form, usage and details of implementation can be made without the exercise of inventive faculty, and without departing from the principles and concepts of the technology. Accordingly, it is not intended that the technology be limited, except as by the claims set forth below.

## Claims

1. An apparatus of a user equipment, UE (108) supporting 3GPP LTE, the UE (108) configured to perform short transmission time interval, TTI, data transmission, the apparatus comprising one or more processors and memory, wherein the apparatus is **characterized by** being configured to:
process (910), for transmission to an eNodeB (104), control information within a short TTI, wherein the short TTI transmission takes place over a subset of resources available for a PUSCH defined for LTE operating according to a legacy TTI, the subset of resources constitutes a short TTI resource block, RB (230a, 230b,..., 230i,..., 230m, 230n), set within a short physical uplink control channel, S-PUCCH, wherein the short TTI is shorter in time than the legacy TTI that has a duration of one millisecond, and wherein the S-PUCCH is a subset of resources available for a short physical uplink shared channel, S-PUSCH, and the S-PUSCH is a subset of resources available for the PUSCH; and
process (920), for transmission to the eNodeB (104), data within the short TTI over the short TTI RB (230a, 230b,..., 230i,..., 230m, 230n) set within the S-PUSCH.

2. The apparatus of claim 1, wherein the short TTI RB (230a, 230b,..., 230i,..., 230m, 230n) set are semi-statically or dynamically allocated.

3. The apparatus of claim 1, wherein the one or more processors and memory are further configured to process, for uplink transmission to or downlink transmission from an eNodeB (104), the data communicated on the short TTI RB (230a, 230b,..., 230i,..., 230m, 230n) set allocated for the short TTI that is less than one millisecond, ms, in a same frequency of alternative data being transmitted using the legacy TTI.

4. The apparatus of claim 1 or 3, wherein the one or more processors and memory are further configured to detect control regions and data regions in the short TTI RB (230a, 230b,..., 230i,..., 230m, 230n) set allocated for the short TTI.

5. The apparatus of claim 1 or 4, wherein the one or more processors and memory are further configured to monitor a control region in the short TTI RB (230a, 230b,..., 230i,..., 230m, 230n) set allocated for the short TTI.

6. The apparatus of claim 1, wherein the one or more processors and memory are further configured to blindly detect the short TTI RB (230a, 230b,..., 230i,..., 230m, 230n) set allocated for the short TTI.

7. The apparatus of claim 1, wherein the short TTI RB (230a, 230b,..., 230i,..., 230m, 230n) set allocated for the short TTI is signaled using the legacy physical downlink control channel, PDCCH (260), masked with a specific radio network temporary identifier, RNTI.

8. An apparatus of an eNodeB (104) supporting 3GPP LTE, the eNodeB (104) configured to perform short transmission time interval, TTI, data transmission with a User Equipment, UE, the apparatus comprising one or more processors and memory, wherein the apparatus is **characterized by** being configured to:
process (1010), for transmission to a UE, control information within a short transmission time interval, TTI, wherein the short TTI transmission takes place over a subset of resources available for a PDSCH defined for LTE operating according to a legacy TTI, the subset of resources constitutes a short TTI resource block, RB (230a, 230b,..., 230i,..., 230m, 230n), set within a short physical downlink control channel, S-PDCCH (260), wherein the short TTI is shorter in time than the legacy TTI that has a duration of one millisecond, and wherein the S-PDCCH (260) is a subset of resources available for a short physical downlink shared channel, S-PDSCH, and the S-PDSCH is a subset of resources available for the PDSCH (266); and
process (1020), for transmission to the UE, data within the short TTI over the short TTI RB (230a, 230b,..., 230i,..., 230m, 230n) set within the S-PDSCH.

9. The apparatus of claim 8, wherein the one or more processors and memory are further configured to multiplex data of the legacy TTI and data of the short TTI using frequency division multiplexing, FDM.

10. The apparatus of claim 8, wherein the one or more processors and memory are further configured to:
use the short TTI in a selected subframe for transmitting data to or receiving data from the UE;
use the legacy TTI and the short TTI for transmitting data to or receiving data from the UE in a selected subframe;
transmit data in the short TTI using only one transport block, TB;
schedule a contiguous set of the short TTI RB (230a, 230b,..., 230i,..., 230m, 230n) set in a frequency domain for transmitting data in the short TTI; or
schedule data, for transmission to the UE, according to the short TTI over the another short TTI RB (230a, 230b,..., 230i,..., 230m, 230n) set within the PUCCH, wherein the other short TTI RB (230a, 230b,..., 230i,..., 230m, 230n) set is the subset of resources available for PUSCH transmissions.

11. The apparatus of claim 8, wherein the one or more processors and memory are further configured to determine the short TTI RB (230a, 230b,..., 230i,..., 230m, 230n) set in order to monitor a short TTI control region, wherein the short TTI RB (230a, 230b,..., 230i,..., 230m, 230n) set is scheduled according to static scheduling, wherein the short TTI RB (230a, 230b,..., 230i,..., 230m, 230n) set is located in a same one or more resource elements, REs (240i), in each subframe, or the short TTI RB (230a, 230b,..., 230i,..., 230m, 230n) set is scheduled according to dynamic scheduling, wherein the short TTI RB (230a, 230b,..., 230i,..., 230m, 230n) set is located in different one or more resource elements, REs (240i), in every subframe.

12. The apparatus of claim 8 or 10, wherein the one or more processors and memory are further configured to generate a bundled short TTI by bundling a plurality of short TTIs, wherein the plurality of short TTIs include a fixed number of the short TTI, wherein the fixed number of short TTI includes one or more symbols in a downlink bundle and one or more symbols in an uplink bundle.

13. The apparatus of claim 8 or 11, wherein the one or more processors and memory are further configured to use the short TTI or the bundled short TTI according to a defined resource allocation for each of the short TTI RB (230a, 230b,..., 230i,..., 230m, 230n) sets.

14. At least one machine readable storage medium having instructions embodied thereon for an eNodeB (104) supporting 3GPP LTE, to perform short transmission time interval, TTI, data transmission with a user equipment, UE, the instructions when executed cause the eNodeB (104) to:
process (1010), for transmission to a UE, control information within a short transmission time interval, TTI, wherein the short TTI transmission takes place over a subset of resources available for a PDSCH defined for LTE operating according to a legacy TTI, the subset of resources constitutes a short TTI resource block, RB (230a, 230b,..., 230i,..., 230m, 230n), set within a short physical downlink control channel, S-PDCCH (260), wherein the short TTI is shorter in time than the legacy TTI that has a duration of one millisecond, and wherein the S-PDCCH (260) is a subset of resources available for a short physical downlink shared channel, S-PDSCH, and the S-PDSCH is a subset of resources available for the PDSCH (266); and
process (1020), for transmission to the UE, data within the short TTI over the short TTI RB (230a, 230b,..., 230i,..., 230m, 230n) set within the S-PDSCH.

15. The at least one machine readable storage medium of claim 14, further comprising instructions which when executed cause the eNodeB (104) to:
process, for reception from the UE, control information within the short TTI over another short TTI resource block, RB (230a, 230b,..., 230i,..., 230m, 230n), set within a short physical uplink control channel, S-PUCCH, wherein the S-PUCCH is a subset of resources available for a short physical uplink shared channel, S-PUSCH, and the S-PUSCH is a subset of resources available for a PUSCH transmission; and
process, for reception from the UE, data within the short TTI over the short TTI RB (230a, 230b,..., 230i,..., 230m, 230n) set within the S-PUSCH.

## Patentansprüche

1. Vorrichtung eines Benutzergeräts, UE (108), das 3GPP LTE unterstützt, wobei das UE (108) konfiguriert ist zum
Durchführen von kurzen Transmission Time Interval, TTI, -Datenübertragung, wobei die Vorrichtung einen oder mehrere Prozessoren und Speicher umfasst, wobei die Vorrichtung **dadurch gekennzeichnet ist, dass** sie konfiguriert ist zum:
Verarbeiten (910), für Übertragung zu einem eNodeB (104), von Steuerinformation innerhalb eines kurzen TTI, wobei die kurze TTI-Übertragung über einem Subsatz von Ressourcen stattfindet, die für einen PUCCH verfügbar sind, der für LTE Betrieb entsprechend einer Legacy TTI definiert ist, wobei der Subsatz von Ressourcen einen kurzen TTI-Ressourcenblock, RB (230a, 230b,...,230i, ..., 230m, 230n), -Satz innerhalb eines kurzen Physical Uplink Control Channel, S-PUCCH, bildet, wobei das kurze TTI kürzer in der Zeit ist als das Legacy-TTI, das eine Dauer von einer Millisekunde aufweist, und wobei das S-PUCCH ein Subsatz von Ressourcen ist, der für eine kurzen Physical Shared Uplink Channel, S-PUSCH, verfügbar ist, und der S-PUSCH ein Subsatz von Ressourcen ist, der für den PUSCH verfügbar ist; und
Verarbeiten (920), für Übertragung an den eNodeB (104), von Daten innerhalb des kurzen TTI über das kurze TTI-RB (230a, 230b,...,230i,...,230m, 230n) Satz innerhalb des S-PUSCH.

2. Vorrichtung nach Anspruch 1, wobei der kurze TTI-RB (230a, 230b,...,230i,....,230m, 230n), Satz semi-statisch oder dynamisch zugewiesen wird.

3. Vorrichtung nach Anspruch 1, wobei der eine oder die mehreren Prozessoren und Speicher ferner konfiguriert sind zum Verarbeiten, für Uplink Übertragung an oder Downlink-Übertragungen vom einen/einem eNodeB (104), wobei die Daten auf einem kurzen TTI-RB (230a, 230b,...,230i,...,230m, 230n) Satz kommuniziert werden, der für das kurze TTI zugewiesen ist, weniger als eine Millisekunde, ms, in einer gleichen Frequenz ist, mit der alternative Daten unter Verwenden des Legacy-TTI übertragen werden.

4. Vorrichtung nach Anspruch 1 oder 3, wobei der eine oder die mehreren Prozessoren und Speicher ferner konfiguriert sind zum Erkennen von Steuerbereichen und Datenbereichen in dem kurzen TTI-RB (230a, 230b,..., 230i,..., 230m, 230n) Satz, der für das kurze TTI zugewiesen ist.

5. Vorrichtung nach Anspruch 1 oder 4, wobei der eine oder die mehreren Prozessoren und Speicher ferner konfiguriert sind zum Überwachen eines Steuerbereichs in dem kurzen TTI-RB (230a, 230b,..., 230i,..., 230m, 230n) Satz, der für das kurze TTI zugewiesen ist.

6. Vorrichtung nach Anspruch 1, wobei der eine oder die mehreren Prozessoren und Speicher ferner konfiguriert sind zum blinden Erfassen des kurzen TTI-RB (230a, 230b,..., 230i,..., 230m, 230n) Satz, der für das kurze TTI zugewiesen ist.

7. Vorrichtung nach Anspruch 1, wobei der kurze TTI-RB (230a, 230b,..., 230i,..., 230m, 230n) Satz, der für das kurze TTI zugewiesen ist, signalisiert wird unter Verwenden des Legacy Physical Downlink Control Channel, PDCCH (260), der mit einer spezifischen Radio Network Temporary Identifier, RNTI, maskiert ist.

8. Vorrichtung eines eNodeB (104), die 3GPP LTE unterstützt, wobei der eNodeB (104) konfiguriert ist zum:
Durchführen von kurzer Transmission Time Interaval, TTI, -Datenübertragung, mit einem Benutzergerät, UE, wobei die Vorrichtung einen oder mehrere Prozessoren und Speicher umfasst, wobei die Vorrichtung **dadurch gekennzeichnet ist, dass** sie konfiguriert ist zum:
Verarbeiten (1010), für Übertragung an das UE, von Steuerinformation innerhalb eines kurzen TTI, wobei die kurze TTI-Übertragung über einem Subsatz von Ressourcen stattfindet, die für einen PDSCH verfügbar sind, der für LTE Betrieb entsprechend einer Legacy TTI definiert ist, wobei der Subsatz von Ressourcen einen kurzen TTI-Ressourcenblock, RB (230a, 230b,...,230i, ..., 230m, 230n), Satz innerhalb eines kurzen Physical Downlink Control Channel, S-PDCCH (260) bildet, wobei das kurze TTI kürzer in der Zeit ist als das Legacy-TTI, das eine Dauer von einer Millisekunde aufweist, und wobei das S-PDCCH (260) ein Subsatz von Ressourcen ist, der für eine kurzen Physical Downlink Shared Channel, S-PDSCH, verfügbar ist, und der S-PDSCH ein Subsatz von Ressourcen ist, der für den PDSCH (266) verfügbar ist; und
Verarbeiten (1020), für Übertragung zu dem UE, von Daten innerhalb des kurzen TTI über das kurze TTI-RB (230a, 230b,...,230i,...,230m, 230n) Satz innerhalb des S-PDSCH.

9. Vorrichtung nach Anspruch 8, wobei der eine oder die mehreren Prozessoren und Speicher ferner konfiguriert sind zum Multiplexen von Daten des Legacy TTI und von Daten des kurzen TTI unter Verwenden von Frequency Division Multiplexing, FDM.

10. Vorrichtung nach Anspruch 8, wobei der einer oder die mehreren Prozessoen und Speicher ferner konfiguriert sind zum:
Verwenden des kurzen TTI in einem ausgewählten Subframe zum Übertragen von Daten an das oder Empfangen von Daten von dem UE;
Verwenden des Legacy TTI und des kurzen TTI zum Übertragen von Daten an das oder Empfangen von Daten von dem UE in einem ausgewählten Subframe;
Übertragen von Daten in dem kurzen TTI unter Verwenden nur eines Transport Block, TB;
Planen eines durchgehenden Satzes des kurzen TTI-RB (230a, 230b,...,230i, ..., 230m, 230n) Satz in einer Frequenzdomäne zum Übertragen von Daten in dem kurzen TTI; oder
Planen von Daten, für Übertragung an das UE, gemäß dem kurzen TTI über den anderen kurzen TTI-RB (230a, 230b,...,230i, ..., 230m, 230n) Satz innerhalb des PUCCH, wobei der andere kurze TTI-RB (230a, 230b,...,230i, ..., 230m, 230n) Satz der Subsatz von Ressourcen ist, der für PUSCH Übertragungen verfügbar ist.

11. Vorrichtung nach Anspruch 8, wobei der eine oder die mehreren Prozessoren und Speicher ferner konfiguriert sind zum Bestimmten des kurzen TTI-RB (230a, 230b,...,230i, ..., 230m, 230n) Satzes, um einen kurzen TTI Steuerbereich zu überwachen, wobei der kurze TTI-RB (230a, 230b,...,230i, ..., 230m, 230n) Satz gemäß statischem Planen geplant ist, wobei der kurze TTI-RB (230a, 230b,...,230i, ..., 230m, 230n) Satz sich in einem gleichen einen oder mehreren Ressourcenelementen, REs (240i), in jedem Subframe befindet, oder der kurze TTI-RB (230a, 230b,...,230i, ..., 230m, 230n) Satz gemäß dynamischen Planen geplant ist, wobei der kurze TTI-RB (230a, 230b,...,230i, ..., 230m, 230n) Satz sich in einem unterschiedlichen einen oder mehrere Ressourcenelementen, REs (240i) in jedem Subframe befindet.

12. Vorrichtung nach Anspruch 8 oder 10, wobei der eine oder die mehreren Prozessoren und Speicher ferner konfiguriert sind zum Erzeugen eines gebündelten kurzen TTI durch Bündeln einer Vielzahl von kurzen TTIs, wobei die Vielzahl von kurzen TTIs eine fixierte Anzahl der kurzen TTI beinhaltet, wobei die fixierte Anzahl von kurzen TTI ein oder mehrere Symbole in einem Downlink-Bündel und ein oder mehrere Symbole in einem Uplink-Bündel beinhaltet.

13. Vorrichtung nach Anspruch 8 oder 11, wobei der eine oder die mehreren Prozessoren und Speicher ferner konfiguriert sind zum Verwenden des kurzen TTI oder des gebündelten kurzen TTI gemäß einer definierten Ressourcenzuweisung für jeden der kurzen TTI-RB (230a, 230b,...,230i, ..., 230m, 230n) Sätze.

14. Mindestes ein maschinenlesbares Speichermedium aufweisend Anweisungen, die darauf für einen eNodeB (104) verkörpert sind, der 3GPP LTE unterstützt, zum Durchführen von kurzer Transmission Time Interval, TTI, -Datenübertragung mit einem Benutzergerät, UE, wobei die Anweisungen, wenn sie ausgeführt werden, den eNodeB (104) veranlassen zum:
Verarbeiten (1010), für Übertragung an ein UE, von Steuerinformation innerhalb eines kurzen TTI, wobei die kurze TTI-Übertragung über einem Subsatz von Ressourcen stattfindet, die für einen PDSCH verfügbar sind, der für LTE Betrieb entsprechend einer Legacy TTI definiert ist, wobei der Subsatz von Ressourcen einen kurzen TTI-Ressourcenblock, RB (230a, 230b,...,230i, ..., 230m, 230n), Satz innerhalb eines kurzen Physical Downlink Control Channel, S-PDCCH (260) bildet, wobei das kurze TTI kürzer in der Zeit ist als das Legacy-TTI, das eine Dauer von einer Millisekunde aufweist, und wobei das S-PDCCH (260) ein Subsatz von Ressourcen ist, der für einen kurzen Physical Downlink Shared Channel, S-PDSCH, verfügbar ist, und der S-PDSCH ein Subsatz von Ressourcen ist, der für den PDSCH (266) verfügbar ist; und
Verarbeiten (1020), für Übertragung an das UE, von Daten innerhalb des kurzen TTI über das kurze TTI-RB (230a, 230b,...,230i,...,230m, 230n) Satz innerhalb des S-PDSCH.

15. Das mindestens eine maschinenlesbare Speichermedium nach Anspruch 14, ferner umfassend Anweisungen, die, wenn sie ausgeführt werden, den eNodeB (104) veranlassen zum:
Verarbeiten, für Empfang von dem UE, von Steuerinformation innerhalb des kurzen TTI über einen anderen kurzen TTI-Ressourcenblock, RB (230a, 230b,...,230i, ..., 230m, 230n) Satz innerhalb eines kurzen Physical Uplink Control Channel, S-PUCCH, wobei der S-PUCCH ein Subsatz von Ressourcen ist, der für einen kurzen Physical Uplink Shared Channel, S-PUSCH, verfügbar ist, und der S-PUSCH ein Subsatz von Ressourcen ist, der für eine PUSCH Übertragung verfügbar ist; und
Verarbeiten, für Empfang von dem UE, von Daten innerhalb des kurzen TTI über das kurze TTI-RB (230a, 230b,...,230i, ..., 230m, 230n) Satz innerhalb des S-PUSCH.

## Revendications

1. Un appareil d'un équipement utilisateur, UE (108) fonctionnant sous 3GPP LTE, l'UE (108) étant configuré pour
réaliser une transmission de données à intervalle de temps de transmission, TTI, court, l'appareil comprenant un ou plusieurs processeurs et une mémoire, dans lequel l'appareil est **caractérisé en ce qu'**il est configuré pour :
traiter (910), pour une transmission à un eNodeB (104), des informations de contrôle dans un TTI court, dans lequel la transmission à TTI court a lieu sur un sous-ensemble de ressources disponibles pour PUSCH défini pour la LTE fonctionnant selon un TTI hérité, le sous-ensemble de ressources constitue un ensemble de blocs de ressources, RB, à TTI court (230a, 230b, ..., 230i, ..., 230m, 230n), dans un canal de contrôle physique court en liaison montante, S-PUCCH, dans lequel le TTI court a un temps plus court que le TTI hérité qui a une durée d'une milliseconde, et dans lequel le S-PUCCH est un sous-ensemble de ressources disponibles pour un canal physique partagé court en liaison montante, S-PUSCH, et le S-PUSCH est un sous-ensemble de ressources disponibles pour le PUSCH ; et
traiter (920), pour une transmission à l'eNodeB (104), des données dans le TTI court sur l'ensemble de RB à TTI court (230a, 230b, ..., 230i, ..., 230m, 230n) dans le S-PUSCH.

2. L'appareil selon la revendication 1, dans lequel l'ensemble de RB à TTI court (230a, 230b, ..., 230i, ..., 230m, 230n), est alloué semi-statiquement ou dynamiquement.

3. L'appareil selon la revendication 1, dans lequel les un ou plusieurs processeurs et la mémoire sont en outre configurés pour traiter, pour une transmission en liaison montante à un eNodeB (104) ou une transmission en liaison descendante depuis celui-ci, les données communiquées sur l'ensemble de RB à TTI court (230a, 230b, ..., 230i, ..., 230m, 230n) alloué pour le TTI court qui est inférieur à une milliseconde, ms, dans une même fréquence de données alternatives qui sont transmises en utilisant le TTI hérité.

4. L'appareil selon la revendication 1 ou 3, dans lequel les un ou plusieurs processeurs et la mémoire sont en outre configurés pour détecter des régions de contrôle et des régions de données dans l'ensemble de RB à TTI court (230a, 230b, ..., 230i, ..., 230m, 230n) alloué pour le TTI court.

5. L'appareil selon la revendication 1 ou 4, dans lequel les un ou plusieurs processeurs et la mémoire sont en outre configurés pour surveiller une région de contrôle dans l'ensemble de RB à TTI court (230a, 230b, ..., 230i, ..., 230m, 230n) alloué pour le TTI court.

6. L'appareil selon la revendication 1, dans lequel les un ou plusieurs processeurs et la mémoire sont en outre configurés pour détecter à l'aveugle l'ensemble de RB à TTI court (230a, 230b, ..., 230i, ..., 230m, 230n) alloué pour le TTI court.

7. L'appareil selon la revendication 1, dans lequel l'ensemble de RB à TTI court (230a, 230b, ..., 230i, ..., 230m, 230n) alloué pour le TTI court est signalé en utilisant le canal de contrôle physique en liaison descendante, PDCCH (260), hérité masqué par un identifiant temporaire de réseau de radiocommunication, RNTI, spécifique.

8. Un appareil d'un eNodeB (104) fonctionnant sous 3GPP LTE, l'eNodeB (104) étant configuré pour
réaliser une transmission de données à intervalle de temps de transmission, TTI, court avec un équipement utilisateur, UE, l'appareil comprenant un ou plusieurs processeurs et une mémoire, dans lequel l'appareil est **caractérisé en ce qu'**il est configuré pour :
traiter (1010), pour une transmission à un UE, des informations de contrôle dans un intervalle de temps de transmission, TTI, court, dans lequel la transmission à TTI court a lieu sur un sous-ensemble de ressources disponibles pour un PDSCH défini pour la LTE fonctionnant selon un TTI hérité, le sous-ensemble de ressources constitue un ensemble de blocs de ressources, RB, à TTI court (230a, 230b, ..., 230i, ..., 230m, 230n) dans un canal de contrôle physique court en liaison descendante, S-PDCCH (260), dans lequel le TTI court a un temps plus court que le TTI hérité qui a une durée d'une milliseconde, et dans lequel le S-PDCCH (260) est un sous-ensemble de ressources disponibles pour un canal physique partagé court en liaison descendante, S-PDSCH, et le S-PDSCH est un sous-ensemble de ressources disponibles pour le PDSCH (266) ; et
traiter (1020), pour une transmission à l'UE, des données dans le TTI court sur l'ensemble de RB à TTI court (230a, 230b, ..., 230i, ..., 230m, 230n) dans le S-PDSCH.

9. L'appareil selon la revendication 8, dans lequel les un ou plusieurs processeurs et la mémoire sont en outre configurés pour multiplexer des données du TTI hérité et des données du TTI court en utilisant un multiplexage par répartition en fréquences, FDM.

10. L'appareil selon la revendication 8, dans lequel les un ou plusieurs processeurs et la mémoire sont en outre configurés pour :
utiliser le TTI court dans une sous-trame sélectionnée pour transmettre des données à l'UE ou recevoir des données depuis celui-ci ;
utiliser le TTI hérité et le TTI court pour transmettre des données à l'UE ou recevoir des données depuis celui-ci dans une sous-trame sélectionnée ;
transmettre des données dans le TTI court en utilisant un seul bloc de transport, TB ;
ordonnancer un ensemble contigu de l'ensemble de RB à TTI court (230a, 230b, ..., 230i, ..., 230m, 230n) , dans un domaine de fréquence pour transmettre des données dans le TTI court ; ou
ordonnancer des données, pour une transmission à l'UE, selon le TTI court sur l'autre ensemble de RB à TTI court (230a, 230b, ..., 230i, ..., 230m, 230n) dans le PUCCH, dans lequel l'autre ensemble de RB à TTI court (230a, 230b, ..., 230i, ..., 230m, 230n) est le sous-ensemble de ressources disponibles pour des transmissions PUSCH.

11. L'appareil selon la revendication 8, dans lequel les un ou plusieurs processeurs et la mémoire sont en outre configurés pour déterminer l'ensemble de RB à TTI court (230a, 230b, ..., 230i, ..., 230m, 230n) afin de surveiller une région de contrôle à TTI court, dans lequel l'ensemble de RB à TTI court (230a, 230b, ..., 230i, ..., 230m, 230n) est ordonnancé selon un ordonnancement statique, dans lequel l'ensemble de RB à TTI court (230a, 230b, ..., 230i, ..., 230m, 230n) est situé dans les mêmes un ou plusieurs éléments de ressources, RE (240i), dans chaque sous-trame, ou l'ensemble de RB à TTI court (230a, 230b, ..., 230i, ..., 230m, 230n) est ordonnancé selon un ordonnancement dynamique, dans lequel l'ensemble de RB à TTI court (230a, 230b, ..., 230i, ..., 230m, 230n) est situé dans un ou plusieurs éléments de ressource, RE (240i) différents dans chaque sous-trame.

12. L'appareil selon la revendication 8 ou 10, dans lequel les un ou plusieurs processeurs et la mémoire sont en outre configurés pour générer un TTI court groupé en groupant une pluralité de TTI courts, dans lequel la pluralité de TTI courts inclut un nombre fixe du TTI court, dans lequel le nombre fixe du TTI court inclut un ou plusieurs symboles dans un groupement en liaison descendante et un ou plusieurs symboles dans un groupement en liaison montante.

13. L'appareil selon la revendication 8 ou 11, dans lequel les un ou plusieurs processeurs et la mémoire sont en outre configurés pour utiliser le TTI court ou le TTI court groupé selon une allocation de ressources définie pour chacun des ensembles de RB à TTI court (230a, 230b, ..., 230i, ..., 230m, 230n).

14. Au moins un support de stockage lisible par machine sur lequel sont intégrées des instructions pour un eNodeB (104) fonctionnant sous 3GPP LTE, pour réaliser une transmission de données à intervalle de temps de transmission, TTI, court, avec un équipement utilisateur, UE, les instructions lorsqu'elles sont exécutées amènent l'eNodeB (104) à :
traiter (1010), pour une transmission à un UE, des informations de contrôle dans un intervalle de temps de transmission, TTI, court, dans lequel la transmission à TTI court a lieu sur un sous-ensemble de ressources disponibles pour un PDSCH défini pour une LTE fonctionnant selon un TTI hérité, le sous-ensemble de ressources constitue un ensemble de blocs de ressources, RB, à TTI court (230a, 230b, ..., 230i, ..., 230m, 230n) dans un canal de contrôle physique court en liaison descendante, S-PDCCH (260), dans lequel le TTI court a un temps plus court que le TTI hérité qui a une durée d'une milliseconde, et dans lequel le S-PDCCH (260) est un sous-ensemble de ressources disponibles pour un canal physique partagé court en liaison descendante, S-PDSCH, et le S-PDSCH est un sous-ensemble de ressources disponibles pour le PDSCH (266) ; et
traiter (1020), pour une transmission à l'UE, des données dans le TTI court sur l'ensemble de RB à TTI court (230a, 230b, ..., 230i, ..., 230m, 230n) dans le S-PDSCH.

15. L'au moins un support de stockage lisible par machine selon la revendication 14, comprenant en outre des instructions qui, lorsqu'elles sont exécutées, amènent l'eNodeB (104) à :
traiter, pour une réception depuis l'UE, des informations de contrôle dans le TTI court sur un autre ensemble de blocs de ressources, RB, à TTI court (230a, 230b, ..., 230i, ..., 230m, 230n) dans un canal de contrôle physique court en liaison montante, S-PUCCH, dans lequel le S-PUCCH est un sous-ensemble de ressources disponibles pour un canal physique partagé court en liaison montante, S-PUSCH, et le S-PUSCH est un sous-ensemble de ressources disponibles pour une transmission PUSCH ; et
traiter, pour une réception depuis l'UE, des données dans le TTI court sur l'ensemble de RB à TTI court (230a, 230b, ..., 230i, ..., 230m, 230n) dans le S-PUSCH.
